# FASCICULE DE BREVET EUROPEEN

(11) **EP 0 823 154 B1**
(45) Date de publication et mention de la délivrance du brevet: **16.12.1998**
(21) Numéro de dépôt: 96913607.6
(22) Date de dépôt: 18.04.1996
(51) Int. Cl.: H04B 14/02

(54) **PROCEDE ET DISPOSITIF POUR LA TRANSMISSION DE SIGNAUX ANALOGIQUES AU MOYEN D'UN SYSTEME DE TRANSMISSION UTILISANT DES LIGNES DE TRANSMISSION OPTIQUE**
VERFAHREN UND EINRICHTUNG ZUR ÜBERTRAGUNG ANALOGER SIGNALE MITTELS EINES ÜBERTRAGUNGSSYSTEMS MIT OPTISCHEN ÜBERTRAGUNGSLEITUNGEN
METHOD AND DEVICE FOR TRANSMITTING ANALOGUE SIGNALS BY MEANS OF A TRANSMISSION SYSTEM USING OPTICAL TRANSMISSION LINES

(30) Priorité: 26.04.1995 FR 9505100
(43) Date de publication de la demande: 11.02.1998
(73) Titulaire: SEXTANT AVIONIQUE, 78141 Velizy Villacoublay (FR)
(72) Inventeur: PITOT, Christian, F-92100 Boulogne (FR); SANNINO, Christian, F-78125 Vieille-Eglise-en-Yvelines (FR)
(74) Mandataire: de Saint-Palais, Arnaud Marie
(86) Numéro de dépôt international: FR9600590
(87) Numéro de publication internationale: WO9634465

(56) Documents cités:
- EP-A- 0 193 396
- EP-A- 0 232 763
- WO-A-94/23510
- GB-A- 2 153 615
- REVIEW OF THE ELECTRICAL COMMUNICATION LABORATORIES, NOV.-DEC. 1979, JAPAN, vol. 27, no. 11-12, ISSN 0029-067X, pages 936-948, XP000570851 YONEDA E ET AL: "Optical fiber versatile transmission systems for field trial"
- FUNKSCHAU, 15 NOV. 1991, GERMANY, no. 24, ISSN 0016-2841, pages 96-99, XP000268436 STRAUB A: "FLINKE BAUSTEINE IN DER MOBILFUNKTECHNIK"

## Description

La présente invention concerne un procédé et un dispositif pour la transmission de signaux analogiques au moyen d'un système de transmission utilisant des lignes de transmission optique.

Elle s'applique d'une façon particulièrement avantageuse, mais non exclusivement, à des transmissions d'informations dans lesquelles l'information transportée est critique et tolère mal les perturbations. Tel est notamment le cas dans des systèmes embarqués aéronautiques, par exemple pour les commandes de vol d'un aérodyne ou la transmission d'un signal issu d'un capteur sensible (environnement perturbé ou tension analogique faible).

Il s'avère, en effet, que dans certaines parties d'un aérodyne, les perturbations électromagnétiques sont suffisamment importantes pour justifier l'utilisation d'un support de transmission optique.

De par leur nature, ces supports se prêtent mieux à la transmission des signaux numériques que des signaux analogiques. Ceci tient notamment à la difficulté d'obtention de composants électro-optiques présentant des caractéristiques linéaires.

Or, l'information à transmettre est fréquemment de type analogique. Ceci est notamment le cas des systèmes de commande de vérin utilisés dans les aérodynes.

Dans ce cas, pour effectuer ce type de transmission, la solution classique consiste à utiliser un système numérique de type réseau de communication qui conduit à échantillonner l'information analogique puis à coder chaque échantillon à l'aide d'un système de codage approprié de manière à disposer d'une information numérique transmissible par voie optique.

Le document GB-A-2 153 615 propose par ailleurs, un dispositif de transmission optique de signaux analogiques basé en émission sur une conversion tension / fréquence de ces signaux à l'aide d'un multivibrateur qui produit des trains d'impulsions de rapport cyclique constant, et en réception, sur la conversion de ces impulsions en impulsions de largeur constante et le comptage de ces impulsions à l'aide d'un monostable.

Ces solutions présentent l'inconvénient de nécessiter l'emploi d'un récepteur apte à décoder les signaux numériques reçus et capable de pallier à la réception de signaux corrompus.
On est alors obligé de doter les capteurs et/ou les actionneurs du système de moyens de traitement de l'information relativement complexes et coûteux.

L'invention a donc plus particulièrement pour but de supprimer ces inconvénients.

Elle propose, à cet effet, d'utiliser, d'une façon totalement inhabituelle, les particularités des convertisseurs analogiques/numériques à compensation de charge (habituellement appelés convertisseurs ΣΔ) et, en particulier, le fait que ces convertisseurs se composent de deux parties structuralement et fonctionnellement distinctes, à savoir : un circuit intégrateur/générateur d'impulsions de compensation de fréquence fixe et un circuit de comptage/décomptage desdites impulsions.

D'une façon plus précise, le procédé selon l'invention comprend les étapes suivantes :
- l'application des signaux analogiques à transmettre à l'entrée d'un convertisseur analogique/numérique dont l'intégrateur/générateur d'impulsions de compensation est situé au lieu de l'émission, tandis que le circuit de comptage/décomptage est situé au lieu de réception,
- la conversion des impulsions de sortie délivrées par le générateur en des impulsions lumineuses,
- la transmission desdites impulsions lumineuses du lieu d'émission au lieu de réception, grâce à un dispositif de transmission optique, tel que des fibres optiques, qui constitue la ligne de transmission entre le lieu d'émission et le lieu de réception,
- la conversion des impulsions lumineuses transmises en des impulsions électriques,
- l'application desdites impulsions électriques au circuit de comptage/décomptage qui se synchronise sur la fréquence du signal reçu, et
- la conversion du signal numérique issu du comptage en un signal analogique de sortie, image du signal analogique d'entrée.

Il apparaît donc que les traitements de signaux effectués au lieu de réception sont de nature très simple et sont réalisables avec une très grande fiabilité.

En plus de la réduction de la complexité des circuits de commande ainsi obtenue, le procédé selon l'invention bénéficie des avantages bien connus des convertisseurs à compensation de charge, notamment en ce qui concerne l'élimination du bruit ou des fréquences parasites.

Un autre avantage de ce procédé consiste en ce qu'il permet de combiner à l'entrée d'un même circuit de comptage/décomptage les trains d'impulsions en provenance de plusieurs lignes de transmission comprenant chacune un générateur d'impulsions de compensation, un convertisseur électro-optique, une ligne de transmission optique et un convertisseur optoélectronique.

Des modes d'exécution de l'invention seront décrits ci-après, à titre d'exemples non limitatifs, avec référence aux dessins annexés dans lesquels :
La figure 1 est un schéma de principe d'un dispositif de transmission à une seule ligne de transmission ;
La figure 2 est une représentation schématique d'un circuit comprenant une unité réceptrice reliée à trois unités émettrices par l'intermédiaire de trois lignes de transmission respectives.

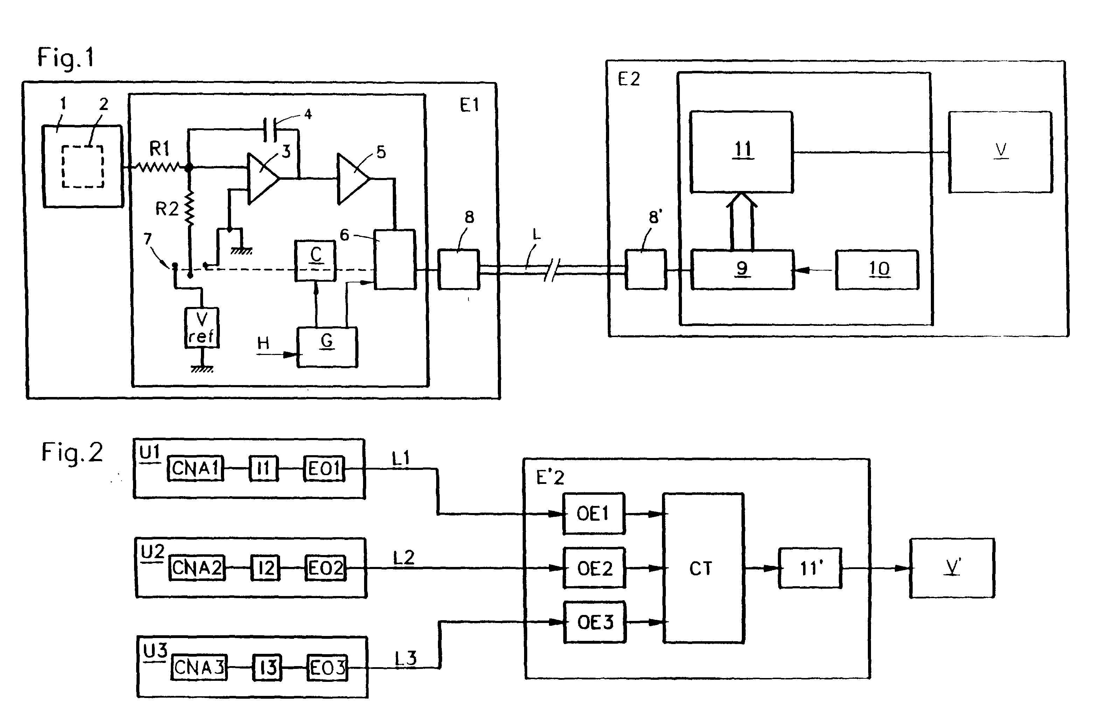

Dans l'exemple représenté sur la figure 1, le dispositif de transmission est destiné à transmettre des informations telles que, par exemple, des ordres de commande élaborés en un premier emplacement E₁, à destination d'un actionneur tel que, par exemple, un vérin V situé en un deuxième emplacement E₂ distant du premier.

Les ordres de commande que l'on veut transmettre peuvent être de type analogique. Dans ce cas, ils peuvent être directement utilisés par le dispositif de transmission. Par contre, dans le cas où ils sont numériques, ils doivent être convertis en données analogiques au moyen d'un convertisseur numérique/analogique de type classique.

Dans cet exemple, le générateur de commandes a été représenté par un bloc 1 à l'intérieur duquel un bloc 2 en traits interrompus indique la présence éventuelle d'un convertisseur numérique/analogique.

Le signal analogique produit par le générateur 1 est appliqué à un convertisseur analogique/numérique à compensation de charge ΣΔ comprenant, de façon connue :
- un intégrateur constitué par un amplificateur opérationnel 3 et un condensateur 4 monté en parallèle entre son entrée directe et sa sortie, l'entrée directe étant reliée au générateur 1 par l'intermédiaire d'une première résistance R₁,
- un comparateur 5 qui compare la tension de sortie de l'intégrateur à une valeur de seuil et qui délivre à sa sortie un signal binaire fonction du résultat de la comparaison,
- un générateur d'impulsions de précision 6 (bascule synchronisée) commandé par le comparateur 5 et dont les impulsions calibrées par un conformateur C effectuent la commande d'un interrupteur 7 qui relie l'entrée directe de l'intégrateur 3, 4 par l'intermédiaire d'une seconde résistance R₂ soit à une source de tension calibrée V_{ref}, soit à la masse

L'interrupteur 7 délivre donc des impulsions d'énergie calibrée qui constituent donc les impulsions de compensation du convertisseur.

Le générateur d'impulsions de précion 6 est rythmé par un générateur de phase G qui reçoit le signal H d'une horloge et qui pilote le conformateur C.

Le fonctionnement de ce convertisseur est alors le suivant :

Une tension d'entrée positive engendre, dans la résistance R₁, un courant qui est intégré par l'intégrateur 3, 4. La tension de sortie de l'intégrateur 3, 4 dont l'entrée est reliée à la masse par l'interrupteur 7 présente alors l'allure d'une rampe négative. Chaque fois que la rampe atteint la valeur de référence du comparateur 5, celui-ci bascule et déclenche l'émission par le générateur 6 d'une impulsion de durée prédéterminée. Cette impulsion provoque l'application par l'interrupteur F de la tension de référence Vref sur l'entrée de l'intégrateur. Pendant la durée d'application de cette tension Vref imposée par le conformateur C, la tension de sortie de l'intégrateur 3, 4 prend la forme d'une rampe positive. Ce processus se répète, engendrant un train d'impulsions qui compense exactement le courant d'entrée. Le comptage et/ou le décomptage de ces impulsions est alors représentatif de la tension du signal analogique d'entrée, conformément au principe du convertisseur ΣΔ.

Par ailleurs, conformément au procédé selon l'invention, les impulsions délivrées par le générateur d'impulsions 6 sont appliquées à l'entrée d'un modulateur couplé à un convertisseur électro-optique 8 qui transforme les impulsions électriques en des impulsions lumineuses. Celles-ci sont alors appliquées à l'extrémité d'une ligne de transmission optique L constituée ici par un faisceau de fibres optiques.

L'autre extrémité de la ligne de transmission L est couplée à un convertisseur optoélectronique 8' couplé à un démodulateur situé au lieu de réception E₂ qui transforme les impulsions lumineuses en des impulsions électriques. Ces impulsions électriques sont alors appliquées à l'entrée d'un compteur/décompteur 9 rythmé par un séquenceur 10 autosynchronisé sur le signal reçu et qui fournit, à sa sortie, un signal numérique représentatif du signal analogique de commande. Ce signal peut être appliqué à un convertisseur numérique/analogique 11 qui délivre alors un signal analogique de commande, image de celui élaboré au lieu d'émission E₁ par le générateur 1 et qui est appliqué au vérin V.

Dans cet exemple, le modulateur est conçu de manière à assurer une adaptation du signal électrique aux moyens de transmission optique utilisés ainsi qu'une synchronisation des éléments binaires transmis.

Bien entendu, l'invention ne se limite pas à un seul type de convertisseur à compensation de charge, étant entendu qu'il existe de nombreuses variantes de ces convertisseurs.

La figure 2 illustre un avantage de l'invention qui résulte du fait qu'il devient possible de combiner plusieurs trains d'impulsions élaborés par des unités émettrices distinctes afin de réaliser des fonctions évoluées destinées à alléger le besoin de traitement à l'intérieur du système récepteur.

Dans cet exemple, chaque unité émettrice U₁, U₂, U₃ comprend, de la façon précédemment indiquée, un convertisseur numérique/analogique éventuel CNA₁, CNA₂, CNA₃, un intégrateur/générateur d'impulsions de compensation I₁, I₂, I₃ et un convertisseur électro-optique EO₁, EO₂, EO₃ relié à un convertisseur optoélectronique OE₁, OE₂, OE₃ de l'unité réceptrice E'₂, par l'intermédiaire d'une ligne de transmission optique L₁, L₂, L₃.

Les sorties des trois convertisseurs sont alors reliées à un circuit de traitement des trains d'impulsions CT pouvant, par exemple, comprendre un voteur (ou un circuit effectuant une comparaison entre les trains d'impulsions délivrés par les convertisseurs optoélectroniques) et un système de comptage permettant d'élaborer un ordre de commande numérique.

La sortie du circuit de traitement CT est reliée à l'entrée d'un convertisseur numérique/analogique 11' qui délivre, sur sa sortie, un signal de commande analogique appliqué à un vérin V'.

## Revendications

1. Procédé pour la transmission de signaux analogiques d'entrée au moyen d'un système de transmission utilisant entre le lieu d'émission et le lieu de réception, au moins une ligne de transmission optique, ce procédé faisant intervenir au moins un convertisseur analogique/numérique à compensation de charge de type ΣΔ comportant un circuit intégrateur/générateur d'impulsions de compensation de durée prédéterminée, et un circuit de comptage/décomptage desdites impulsions,
caractérisé en ce qu'il comprend les étapes suivantes :
- l'application des signaux analogiques à transmettre à l'entrée du susdit convertisseur analogique/numérique dont l'intégrateur/générateur d'impulsions de compensation est situé au lieu de l'émission, tandis que le circuit de comptage/décomptage est situé au lieu de réception,
- la conversion des impulsions de sortie délivrées par le générateur en des impulsions lumineuses,
- la transmission desdites impulsions lumineuses du lieu d'émission au lieu de réception, grâce à un dispositif de transmission optique, tel que des fibres optiques, qui constitue la ligne de transmission entre le lieu d'émission et le lieu de réception,
- la conversion des impulsions lumineuses transmises en des impulsions électriques,
- l'application desdites impulsions électriques au circuit de comptage/décomptage qui se synchronise sur le signal reçu, et
- la conversion du signal numérique issu du comptage/décomptage en un signal analogique de sortie, image du signal analogique d'entrée.

2. Procédé selon la revendication 1,
caractérisé en ce que les susdits signaux analogiques d'entrée sont obtenus à partir d'un signal numérique grâce à une conversion numérique/analogique.

3. Procédé selon la revendication 1 selon lequel les signaux analogiques d'entrée émanent de trois sources distinctes (CNA₁, CNA₂, CNA₃),
caractérisé en ce que les signaux engendrés par chacune de ces sources (CNA₁, CNA₂, CNA₃) sont appliqués à un intégrateur/générateur d'impulsions de compensation respectif (3 à 7) dont les impulsions de sortie sont converties en impulsions lumineuses puis transmises au lieu de réception grâce à un dispositif de transmission optique respectif (L), et en ce que ces impulsions lumineuses sont converties en des impulsions électriques qui sont traitées dans un même circuit de traitement (CT) comprenant un circuit de comptage/décomptage.

4. Procédé selon la revendication 3,
caractérisé en ce que le susdit circuit de traitement (CT) comprend un voteur.

5. Dispositif pour la mise en oeuvre du procédé selon la revendication 1,
caractérisé en ce qu'il comprend un intégrateur/générateur d'impulsions de compensation (3 à 7) qui reçoit la tension d'entrée et qui fournit des impulsions de compensation de fréquence fixe dont le comptage/décomptage est représentatif de ladite tension d'entrée, un convertisseur électro-optique (8) qui transforme les impulsions de compensation en impulsions lumineuses, une ligne de transmission optique (L) à l'entrée de laquelle sont appliquées les impulsions lumineuses, un convertisseur optoélectronique (8') qui transforme les impulsions lumineuses présentes à la sortie de la ligne (L) en impulsions électriques, un circuit de comptage/décomptage (9) synchronisé avec les impulsions électriques, permettant de délivrer une information numérique représentative de la tension d'entrée et un convertisseur numérique/analogique (11) qui transforme l'information numérique en une information analogique de sortie.

6. Dispositif selon la revendication 5,
caractérisé en ce que le susdit intégrateur/générateur d'impulsions de compensation comprend un intégrateur (3, 4) qui reçoit la tension d'entrée par l'intermédiaire d'une première résistance (R₁) et dont la sortie est connectée à l'entrée d'un comparateur à seuil (5) dont la sortie pilote un générateur d'impulsions calibrées (6) synchronisé par un générateur de phase (G), qui effectue la commande d'un interrupteur (7) par l'intermédiaire d'un conformateur (C), reliant l'entrée de l'intégrateur à une source de tension calibrée (Vref), par l'intermédiaire d'une seconde résistance (R₂).

7. Dispositif selon l'une des revendications 5 et 6,
caractérisé en ce qu'il comprend plusieurs sources de tension analogique d'entrée (CNA₁, CNA₂, CNA₃) et, pour chacune des sources, un intégrateur/générateur d'impulsions de compensation (I₁ à I₃), un convertisseur électro-optique (EO₁ à EO₃), une ligne de transmission optique (L₁ à L₃) et un convertisseur optoélectronique (OE₁ à OE₃), et en ce que les impulsions électriques délivrées par les convertisseurs optoélectroniques (OE₁ à OE₃) sont appliquées à un circuit de traitement (CT) dont la sortie est connectée à un convertisseur numérique/analogique (11) qui délivre la tension analogique de sortie.

8. Dispositif selon la revendication 7,
caractérisé en ce que le circuit de traitement (CT) comprend un voteur et un circuit de comptage/décomptage (9) permettant d'élaborer un ordre de commande numérique.

## Patentansprüche

1. Verfahren zur Übertragung analoger Eingangssignale mittels eines Übertragungssystems, das zwischen dem Sendeort und dem Empfangsort wenigstens eine optische Übertragungsleitung verwendet, wobei dieses Verfahren wenigstens einen lastkompensierenden Analog/Digital-Wandler vom Typ ΣΔ mit einem Integrator/Generator für Ausgleichsimpulse vorgegebener Dauer und einem Vorwärts-Rückwärtszähler für die erwähnten Impulse verwendet,
dadurch gekennzeichnet, dass es folgende Stufen umfasst :
- Zuweisung der zu übertragenden Signale an den Eingang des erwähnten Analog/Digital-Wandlers, dessen Integrator/Generator für Ausgleichsimpulse sich am Sendeort befindet, während der Vorwärts-Rückwärtszähler sich am Empfangsort befindet,
- Umwandlung der von dem Generator erhaltenen Ausgangsimpulse in Lichtimpulse,
- Übertragung der Lichtimpulse vom Sendeort zum Empfangsort über eine Vorrichtung zur optischen Übertragung, z.B. Lichtwellenleiter, welche die Übertragungsleitung zwischen dem Sendeort and dem Empfangsort bildet,
- Umwandlug der übertragenen Lichtimpulse in elektrische Impulse,
- Zuweisung der elektrischen Impulse an den Vorwärts-Rückwärtszähler, der sich gemäss dem empfangenen Signal synchronisiert, und
- Umwandlung des von dem Vorwärts-Rückwärtszähler gesendeten digitalen Signals in ein analoges Ausgangssignal, das dem analogen Eingangssignal entspricht.

2. Verfahren nach Anspruch 1,
dadurch gekenzeichnet, dass die erwähnten analogen Eingangssignale durch eine Digital/Analog-Umwandlung, ausgehend von einem digitalen Signal, erhalten werden.

3. Verfahren nach Anspruch 1, wobei die analogen Eingangssignale von drei verschiedenen Quellen (CNA₁, CNA₂, CNA₃) stammen,
dadurch gekennzeichnet, dass die von jeder diese Quellen (CNA₁, CNA₂, CNA₃) erzeugten Signale einem entsprechenden Integrator/Generator für Ausgleichsimpulse (3 bis 7) zugewiesen werden, dessen Ausgangsimpulse in Lichtimpulse umgewandelt und dann über eine entsprchende Vorrichtung zur optischen Übertragung (L) an den Empfangsort übertragen werden, dass diese Lichtipulse in elektrische Impulse umgewandelt werden, die ein- und derselbe, einen Vorwärts-Rückwärtszähler umfassende Verarbeitungskreis (CT) verarbeitet.

4. Verfahren nach Anspruch 3,
dadurch gekennzeichnet, dass der erwähnte Verarbeitungskreis (CT) einen Wähler umfasst.

5. Vorrichtung zur Durchführung des Verfahrens nach Anspruch 1, dadurch gekennzeichet, dass sie umfasst : einen Integrator/Generator für Ausgleichsimpulse (3 bis 7), der die Eingangsspannung empfängt und Ausgleichsimpulse mit einer bestimmten Frequenz liefert, deren Vorwärts-Rückwärts-Zählwert der erwähnten Eingangsspannung entspricht, einen elektronenoptischen Wandler (8), der die Ausgleichsimpulse in Lichtimpulse umwandelt, eine optische Übertragungsleitung (L), deren Eingang die Lichtimpulse zugewiesen werden, einen optoelektronischen Wandler (8'), der die am Ausgang der Leitung (L) vorhandenen Lichtimpulse in elektrische Impulse umwandelt, einen Vorwärts-Rückwärtszähler (9), der mit den elektrischen Impulsen synchronisiert wird und das Erzeugen einer digitalen Information erlaubt, die der Eingangsspannung entspricht, und einen Digital/Analog-Wandler (11), der die digitale Information in eine analoge Ausgangsinformation umwandelt.

6. Vorrichtung nach Anspruch 5,
dadurch gekennzeichnet dass der erwähnte Integrator/Generator für Ausgleichsimpulse einen Integrator (3, 4) umfasst der die Eingangsspannung über einen ersten Widerstand (R₁) empfängt und dessen Ausgang mit dem Eingang eines Schwellenwert-Komparators (5) verbunden ist, dessen Ausgang einen Generator für Eichimpulse (6) steuert, der durch einen Phasengenerator (G) synchronisiert wird, welcher einen Schalter (7) über einen Konformator (C) steuert, der den Eingang des Integrators über einen zweiten Widerstand (R2) mit einer Eichspannungsquelle (Vref) verbindet.

7. Vorrichtung nach einem der Ansprüche 5 und 6,
dadurch gekennzeichnet, dass sie mehrere Quellen für eine analoge Eingangsspannung (CNA₁, CNA₂, CNA₃) und für jede dieser Quellen einen Integrator/Generator für Ausgleichsimpulse (I₁ bis I₃), einen elektronenoptischen Wandler (EO₁ bis EO₃), eine optische Übertragungsleitung (L₁ bis L₃) und einen optoelektronischen Wandler (OE₁ bis OE₃) umfasst, und die von den optoelektronischen Wandlern (OE₁, OE₂, OE₃) gelieferten elektrischen Impulse einem Verarbeitungskreis (CT) zugewiesen werden, dessen Ausgang mit einem Digital/Analog-Wandler (11) verbunden ist, der die analoge Ausgangsspannung liefert.

8. Vorrichtung nach Anspruch 7,
dadurch gekennzeichnet, dass der Verarbeitungskreis (CT) einen Wähler und einen Vorwärts-Rückwärtszähler (9) umfasst, der das Erzeugen eines numerischen Steuerbefehls erlaubt.

## Claims

1. Method for the transmission of analog input signals by means of a transmission system using, between the point of transmission and the point of reception, at least one optical transmission line, this method using at least one ΣΔ type load compensation analog-to-digital converter comprising an integrator / generator of compensation pulses of predetermined duration, and a circuit for the reversible counting of said pulses, characterized in that it comprises the following stages:
- the application of the analog signals to be transmitted to the input of said analog-to-digital converter of which the compensation pulse integrator / generator is situated at the point of transmission, whereas the reversible counting circuit is located at the point of reception,
- the conversion of the output pulses, produced by the generator, into light pulses,
- the transmission of said light pulses from the point of transmission to the point of reception, by way of an optical transmission device, such as optical fibers, which constitutes the transmission line between the point of transmission and the point of reception,
- the conversion of the light pulses transmitted into electric pulses,
- the application of said electric pulses to the reversible counting circuit which synnchronises itself with the signal received, and
- the conversion of the digital signal, coming from the reversible counting, into an analog output signal which is an image of the analog input signal.

2. Method as claimed in claim 1,
characterized in that said analog input signals are obtained from a digital signal by way of a digital-to-analog conversion.

3. Method as claimed in claim 1 according to which the analog input signals come from three separate sources (CNA₁, CNA₂, CNA₃),
characterized in that the signals generated by each of these sources (CNA₁, CNA₂, CNA₃) are applied to a respective compensation pulse integrator / generator (3 to 7) whose output pulses are converted into light pulses and then transmitted to the point of reception by means of a respective optical transmission device (L), and in that these light pulses are converted into electric pulses which are processed in a same processing circuit (CT) comprising a reversible counting circuit.

4. Method as claimed in claim 3,
characterized in that said processing circuit (CT) comprises a voting unit.

5. Device for the implementation of the method as claimed in claim 1,
characterized in that it comprises a compensation pulse integrator/generator (3 to 7) which receives the input voltage and which provides fixed-frequency compensation pulses of which the reversible counting is representative of said input voltage, an electro-optical converter (8) which transforms the electric pulses into light pulses, an optical transmission line (L) to the input of which the light pulses are applied, an opto-electronic converter (8') which transforms the light pulses present at the output of the line (L) into electric pulses, a reversible counting circuit (9), synchronised with the electric pulses, enabling the production of a digital datum representative of the input voltage and a digital-to-analog converter (11) which transforms the digital information into an analog output datum.

6. Device as claimed in claim 5,
characterized in that said compensation pulse integrator/generator comprises an integrator (3, 4) which receives the input voltage via a first resistor (R₁) and of which the output is connected to the input of a threshold comparator (5) whose output drives a generator of calibrated pulses (6) synchronised by a phase generator (G), which controls a switch (7) via a pulse shaper (C) connecting the input of the integrator to a source of calibrated voltage (V_{ref}), via a second resistor (R₂).

7. Device as claimed in either claim 5 or claim 6,
characterized in that it comprises several analog input voltage sources (CNA₁, CNA₂, CNA₃) and, for each of these sources, a compensation pulse integrator/generator (I₁ to I₃), an electro-optical converter (EO₁ to EO₃), an optical transmission line (L₁ to L₃) and an opto-electronic converter (OE₁ to OE₃), and in that the electric pulses supplied by the opto-electronic converters (OE₁ to OE₃) are applied to a processing circuit (CT) of which the output is connected to a digital-to-analog converter (11) which supplies the analog output voltage.

8. Device as claimed in claim 7,
characterized in that the processing circuit (CT) comprises a voting unit and a reversible counting circuit (9) enabling a digital control instruction to be elaborated.
